# EUROPÄISCHE PATENTSCHRIFT

(11) **EP 2 851 667 B1**
(45) Veröffentlichungstag und Bekanntmachung des Hinweises auf die Patenterteilung: **23.02.2022**
(21) Anmeldenummer: 14176262.5
(22) Anmeldetag: 09.07.2014
(51) Int. Cl.: G01L 3/10, G01L 5/13, G01L 5/16

(54) **Sensoranordnung zum Erfassen einer mechanischen Beanspruchung eines Bauteils eines landwirtschaftlichen Fahrzeugs**
Sensor assembly for recording a mechanical stress placed upon a component of an agricultural vehicle
Système de capteur destiné à détecter une sollicitation mécanique d'un composant d'un véhicule agricole

(30) Priorität: 19.09.2013 DE 102013110311
(43) Veröffentlichungstag der Anmeldung: 25.03.2015
(73) Patentinhaber: CLAAS Tractor S.A.S., 78141 Vélizy-Villacoublay Cedex (FR)
(72) Erfinder: Wieckhorst, Jan Carsten, 33098 Paderborn (DE); Kloster, Victor, 33178 Borchen (DE); Fedde, Thomas, 33129 Delbrück (DE)
(74) Vertreter: CLAAS Gruppe

(56) Entgegenhaltungen:
- EP-A1- 1 744 136
- EP-A1- 2 407 766
- EP-A2- 0 176 725
- EP-B1- 1 902 286
- WO-A1-2013/104981
- DE-A1- 3 213 589
- DE-A1- 4 127 965
- DE-A1-102011 010 153
- US-A1- 2009 301 224

## Beschreibung

Die Erfindung betrifft ein landwirtschaftliches Fahrzeug mit einer Sensoranordnung zum Erfassen einer mechanischen Beanspruchung eines Bauteils eines landwirtschaftlichen Fahrzeugs gemäß dem Oberbegriff des Anspruchs 1.

Für landwirtschaftliche Fahrzeuge wie beispielsweise Traktoren besteht ein Bedarf, deren den Reifen-Bodenkontakt beschreibende Größen wie Radkräfte und/oder -drehmomente zu ermitteln. Denn mit Kenntnis dieser Größen lässt sich unter anderem die Energieeffizienz des Fahrantriebs des Fahrzeugs erhöhen und lässt sich die Belastung des mit dem Fahrzeug befahrenen Bodens verringern.

Zugarbeiten auf dem Feld haben nach wie vor einen großen Anteil am Einsatzkollektiv eines Traktors. Ohne eine geeignete Sensorik für Radkräfte und/oder -drehmomente ist es selbst für erfahrene Bediener schwierig, den Reifenfülldruck und die Radlast (Ballastierung) für den jeweiligen Einsatzweck geeignet einzustellen. Eine ungünstige Reifendruckbefüllung und/oder eine ungünstige Ballastierung des Traktors verursachen jedoch insbesondere bei schwerer Zugarbeit auf dem Feld hohe Verlustleistungen. Diese ließen sich in Kenntnis der den Reifen-Bodenkontakt beschreibenden Größen deutlich verringern.

Aus dem LKW-Bereich ist zumindest das Messen der Achslast luftgefederter Achsen bekannt und wird genutzt, um die Bremskräfte an die Achslasten und/oder die Beladungszustände anzupassen (lastabhängiger Bremskraftregler). Hier wird die Achslast aus dem Druck im Luftfederbalg und dem Einfederweg berechnet.

Aus der WO 2013/104981 A1 ist eine Hinterachse für einen Traktor bekannt, an deren Achstrichter ein Belastungssensor angebracht ist. Eine abhängig von der Achslast eintretende Verformung des Achstrichters soll mittels des Belastungssensors erfassbar sein, um auf diese Weise die Achslast bestimmen zu können. Nachteilig an dieser Art von Sensor ist, dass eine genaue Messung schon aufgrund der (erforderlichen) Steifigkeit des Achstrichters erschwert ist. Weiterhin ist der Belastungssensor am Einbauort unmittelbar der Umgebung ausgesetzt, somit also den Einflüssen von Schmutz, Temperatur, Feuchtigkeit und gegebenenfalls sogar mechanischer Einwirkung (z.B. Steinschlag), wodurch unter anderem das Messergebnis stark beeinträchtigt werden kann. Eine Messung von Drehmomenten ist mit der beschriebenen Sensoranordnung nicht möglich.

Bei Traktoren lässt sich zumindest die Summe der in horizontaler Richtung angreifenden Radkräfte, welche der Zugkraft des Gesamtfahrzeugs entspricht, durch eine Kraftmessung zwischen ziehendem Traktor und am Heckdreipunkt angebautem Arbeitsgerät ermitteln. Neben einer geringen damit erzielbaren Genauigkeit (nur qualitative Messung von Kraftzunahme bzw. -abnahme) ist daran nachteilig, dass sich die Messung nur mit am Heckdreipunkt angebautem Arbeitsgerät durchführen lässt.

Insbesondere für ungefederte Achsen landwirtschaftlicher Fahrzeuge hat sich bis heute keine Sensortechnologie durchgesetzt, die ein einfaches und zuverlässiges Messen von Radkräften bzw. -drehmomenten erlaubt.

Aus der DE 32 13 589 A1 sowie DE 41 27 965 A1 sind Fahrzeuge mit einer Sensoranordnung gemäß dem Oberbegriff des Anspruches 1 bekannt.

Es ist eine Aufgabe der vorliegenden Erfindung, eine Sensoranordnung zum Erfassen der mechanischen Beanspruchung eines Bauteils eines landwirtschaftlichen Fahrzeugs anzugeben, die zuverlässig und genau arbeitet und mit der sich ein Fahrzeug mit verhältnismäßig geringem konstruktiven Aufwand ausstatten lässt.

Die Aufgabe wird gelöst durch ein landwirtschaftliches Fahrzeug mit einer Sensoranordnung gemäß dem Anspruch 1. Diese zeichnet sich dadurch aus, dass das Bauteil eine für dessen mechanische Beanspruchung charakteristische physikalische Eigenschaft aufweist, die mittels eines Aufnehmers erfassbar ist. Erfindungsgemäß weist das Bauteil selbst demnach eine physikalische Eigenschaft auf, aus welcher sich auf den mechanischen Beanspruchungszustand des Bauteils schließen lässt. Diese physikalische Eigenschaft ist also charakteristisch dafür, wie das Bauteil mechanisch beansprucht wird, so dass sich daraus insbesondere ablesen lässt, ob bzw. in welcher Höhe eine Kraft und ein Moment auf das Bauteil wirken. Das Bauteil selbst stellt damit einen Primärsensor innerhalb der Sensoranordnung dar. Daraus ergibt sich der Vorteil einer unmittelbaren Messung, nämlich indem die erste (primäre) Messumformung durch das beanspruchte Bauteil selbst stattfindet. Entsprechend ist eine bauraumsparende Gestaltung der Sensoranordnung möglich. Es sind verschiedene technische Prinzipien denkbar, wonach sich aus der physikalischen Eigenschaft eines Bauteils auf dessen mechanischen Beanspruchungszustand schließen lässt.

Eine denkbare Möglichkeit stellt beispielsweise die Erfassung und Analyse eines für das Bauteil charakteristischen Körperschallschwingungsspektrums dar. Ändert sich der Zustand des Bauteils durch mechanische Beanspruchung, so ändert sich damit auch das Körperschallschwingungsspektrum des Bauteils, was durch einen Aufnehmer erfassbar und somit auswertbar ist.

Gemäß der Erfindung wird das in das Bauteil einprägte Magnetfeld erfasst und analysiert. Dabei wird der physikalische Effekt der sogenannten inversen Magnetostriktion genutzt, wonach sich ein in ein Bauteil eingeprägtes Magnetfeld ändert, wenn Kräfte und/oder Momente auf dieses einwirken, unter denen sich das Bauteil verbiegt oder verdreht. Dementsprechend stellt in diesem Fall das Bauteil selbst einen auf dem Prinzip der inversen Magnetostriktion beruhenden primären Sensor ("magnetoelastischer Sensor") dar, indem es sich bei der physikalischen Eigenschaft um ein von der mechanischen Beanspruchung des Bauteils abhängiges Magnetfeld des Bauteils handelt. Damit in das Bauteil ein Magnetfeld einprägbar ist, handelt es sich bevorzugt um ein ferromagnetisches Bauteil.

Zur Anwendung der inversen Magnetostriktion wird das Bauteil vorzugsweise mit einem speziellen Puls-Frequenzmuster kodiert und erhält somit eine Kennzeichnung. An dem Bauteil entsteht damit ein in sich geschlossenes, dauerhaft gespeichertes Magnetmuster, ohne dass die mechanischen Eigenschaften des Bauteils dadurch beeinflusst werden. Eine Oberflächenbehandlung des Bauteils ist dazu nicht erforderlich. Wirken nun Kräfte oder Momente auf das Bauteil, so verursachen die im Bauteil auftretenden Spannungen Lageverschiebungen des Magnetfelds, die mit der Stärke und Richtung der einwirkenden Kräfte bzw. Momente korrespondieren.

Zweckmäßigerweise handelt es sich bei dem Aufnehmer, der innerhalb der Sensoranordnung einen Sekundärsensor darstellt, entsprechend um einen Magnetfeldsensor (oder mehrere derartiger Sensoren), der zur Erfassung eines in das Bauteil eingeprägten Magnetfelds geeignet ist. Der Magnetfeldsensor ist dabei so nahe dem Bauteil angeordnet, dass eine Detektion des vom Bauteil ausgehenden Magnetfelds möglich ist. Eine geeignete Auswerteinrichtung dient dann zur Ermittlung der auf das Bauteil wirkenden Kräfte bzw. Momente basierend auf den Ausgangssignalen des Magnetfeldsensors bzw. einer Vielzahl von Magnetfeldsensoren.

Das beschriebene Messprinzip der inversen Magnetostriktion ist berührungslos und somit verschleißfrei und lässt sich innerhalb eines großen Temperaturbereichs nutzen. Es eignet sich für statische wie für dynamische Messungen am Bauteil. Zudem ist das Messprinzip bei hoher Genauigkeit unempfindlich gegenüber Verschmutzung sowie Vibrationen.

Grundsätzlich ist es denkbar, eine wie zuvor beschriebene Sensoranordnung für Bauteile unterschiedlicher Art und Funktion einzusetzen. Eine bevorzugte Einsatzmöglichkeit besteht jedoch darin, dass es sich bei dem Bauteil um ein Rotationsteil, insbesondere um eine Welle, bevorzugt um eine Achswelle des Fahrzeugs handelt. An rotierenden Maschinenelementen wie Wellen besteht nämlich aufgrund deren Bewegungszustands eine besondere Schwierigkeit, darauf einwirkende Kräfte oder Momente einfach und sicher zu erfassen, weshalb dies in der Praxis bislang meist nur indirekt oder an einem nachteiligen Ort erfolgt, wie beispielsweise in der eingangs genannten WO 2013/104981 A1 beschrieben, wo am ruhenden Achstrichter gemessen wird.

Zur Erzielung einer genauen Messung weist das Bauteil zum indest zwei axiale Abschnitte auf, an denen ein gerichtetes Magnetfeld in das Bauteil eingebracht ist, wobei das Magnetfeld jedes der axialen magnetisierten Abschnitte mittels eines zugehörigen Magnetfeldsensors erfassbar ist. Dabei weist jeder der axialen magnetisierten Abschnitte eine durch unterschiedliche magnetische Polarität gebildete umfängliche Kodierung auf. Das Magnetfeld in den zumindest zwei axialen Abschnitten ist tangential ausgerichtet.

Weise eine Differenzmessung möglich, die ein Herausrechnen von Störeffekten erlaubt, wie sie beispielsweise durch das Erdmagnetfeld entstehen.

Handelt es sich bei dem Bauteil um eine Welle, so sollten die magnetisierten axialen Abschnitte bevorzugt in einem Bereich der höchsten auf die Welle wirkenden Spannungen angeordnet sein, wenn eine möglichst genaue Kraftmessung erfolgen soll. Denn in diesem Bereich ist - bedingt durch die maximal auftretende Spannung - auch die Veränderung des Magnetfelds bei einer Krafteinwirkung maximal und somit am einfachsten messbar. Bei einer Achswelle, beispielsweise einer Hinterachse eines Traktors, bietet sich für die magnetisierten axialen Abschnitte demnach nahe des äußeren Radlagers eine bevorzugte Position für deren Anordnung, da hier innerhalb der Achswelle die maximalen Normalspannungen in Folge einer Biegung auftreten.

Entsprechend ist die Sensoranordnung vorteilhaft zur Erfassung an der Achswelle des Fahrzeugs angreifender Kräfte nutzbar, wozu im Bereich der axialen magnetisierten Abschnitte tangential ausgerichtete Magnetfeldspulen um die Achswelle herum angeordnet sind.

Von den in Bezug auf die Achswelle tangential ausgerichteten Magnetfeldspulen können einige in vertikaler Richtung ausgerichtet sein. Diese sind vorteilhaft zur Erfassung einer Normalspannung in Folge einer Biegung der Achswelle nutzbar, die mit der Radlast des zugehörigen Rads korrespondiert.

Von den in Bezug auf die Achswelle tangential ausgerichteten Magnetfeldspulen können einige in horizontaler Richtung ausgerichtet sein. Diese sind vorteilhaft zur Erfassung einer Normalspannung in Folge einer Biegung der Achswelle nutzbar, die mit der Triebkraft (auch: "Zugkraft") des zugehörigen Rads korrespondiert.

Auf weiterhin vorteilhafte Weise ist die Sensoranordnung zur Erfassung eines auf die Achswelle wirkenden Torsionsmoments nutzbar, wozu im Bereich der axialen magnetisierten Abschnitte axial ausgerichtete Magnetfeldspulen um die Achswelle herum angeordnet sind.

Für eine zuverlässige und genaue Messung ist es erforderlich, dass für die Magnetfeldsensoren, insbesondere die diesen zugeordneten Magnetfeldspulen, eine genau definierte Position gegenüber dem Bauteil vorgegeben ist. Demnach sind vorteilhaft die Magnetfeldspulen in einer festen Position gegenüber dem Bauteil angeordnet, indem deren Position durch Anordnung mehrerer Magnetfeldspulen an einer gemeinsamen Halteeinrichtung vorgegeben ist. Verschiedene Möglichkeiten für eine solche Halteeinrichtung sind denkbar. Beispielsweise können die Magnetfeldspulen mit einem gemeinsamen Spulenhalter vergossen sein, wobei der Spulenhalter in fester Position zum Bauteil befestigt ist.

Die Erfindung bezieht sich neben einer Sensoranordnung auch auf ein landwirtschaftliches Fahrzeug, wie insbesondere einen Traktor oder eine selbstfahrende Erntemaschine mit einer wie zuvor beschriebenen Sensoranordnung. Das Fahrzeug zeichnet sich aus durch eine mit den Magnetfeldsensoren in Signalverbindung stehende Auswerteinrichtung, die geeignet ist, aus einer durch Torsion und/oder Biegung des Bauteils verursachten Änderung dessen Magnetisierung ein an dem Bauteil angreifendes Drehmoment und/oder eine daran angreifende Kraft zu ermitteln. Insbesondere handelt es sich bei den zu ermittelnden Größen um ein auf eine Achswelle wirkendes Antriebsdrehmoment bzw. um eine auf eine Achswelle wirkende Fahrwerkskraft.

Mit dem Fahrzeug ist es demnach möglich, Radkräfte und/oder Raddrehmomente zu messen, woraus sich vielfältige Möglichkeiten ergeben, die Effizienz, die Bodenschonung, die Sicherheit, die Funktionalität, den Bedienerkomfort und dergleichen zu steigern. Gemäß einer einfachen Ausführung werden die ermittelten Größen für einen Bediener des Fahrzeugs beispielsweise auf einer Anzeige visualisiert. Dem Bediener steht es dann frei, ob und wie er darauf reagiert.

Gemäß einer vorteilhaften Weiterbildung kann alternativ oder ergänzend vorgesehen sein, dass die ermittelten Größen als Eingangsgrößen in ein System zur Regelung weiterer Betriebsparameter und/oder Funktionen des landwirtschaftlichen Fahrzeugs und/oder eines landwirtschaftlichen Arbeitsgeräts eingehen. Dementsprechend bezieht sich die Erfindung weiterhin auf ein System zur Regelung eines Betriebsparameters und/oder einer Funktion eines landwirtschaftlichen Fahrzeugs und/oder Arbeitsgeräts in Abhängigkeit der mechanischen Beanspruchung eines bewegten Bauteils des Fahrzeugs, wobei die mechanische Beanspruchung mittels einer wie zuvor beschriebenen Sensoranordnung erfasst wird. Ein solches System kann beispielsweise eine Regelung zur Verbesserung des Traktionsverhaltens des Fahrzeugs beinhalten.

Die Erfindung wird nachfolgend anhand eines in einer Zeichnung dargestellten Ausführungsbeispiels beschrieben und näher erläutert. Daraus ergeben sich auch weitere vorteilhafte Wirkungen. In der Zeichnung zeigt:
- Fig. 1: einen Traktor in schematischer Ansicht von hinten,
- Fig. 2: eine mit einer Sensoranordnung ausgestattete Hinterachse eines Traktors im Schnitt von hinten,
- Fig. 3: eine beispielhafte Darstellung des Wirkungsprinzips der inversen Magnetostriktion bei Torsion,
- Fig. 4: eine Sensoranordnung in Prinzipdarstellung, die zur Erfassung eines Torsionsmoments geeignet ist,
- Fig. 5: eine beispielhafte Darstellung des Wirkungsprinzips der inversen Magnetostriktion bei Biegung,
- Fig. 6: eine Sensoranordnung in Prinzipdarstellung, die zur Erfassung von Biegekräften in horizontaler und in vertikaler Richtung geeignet ist.

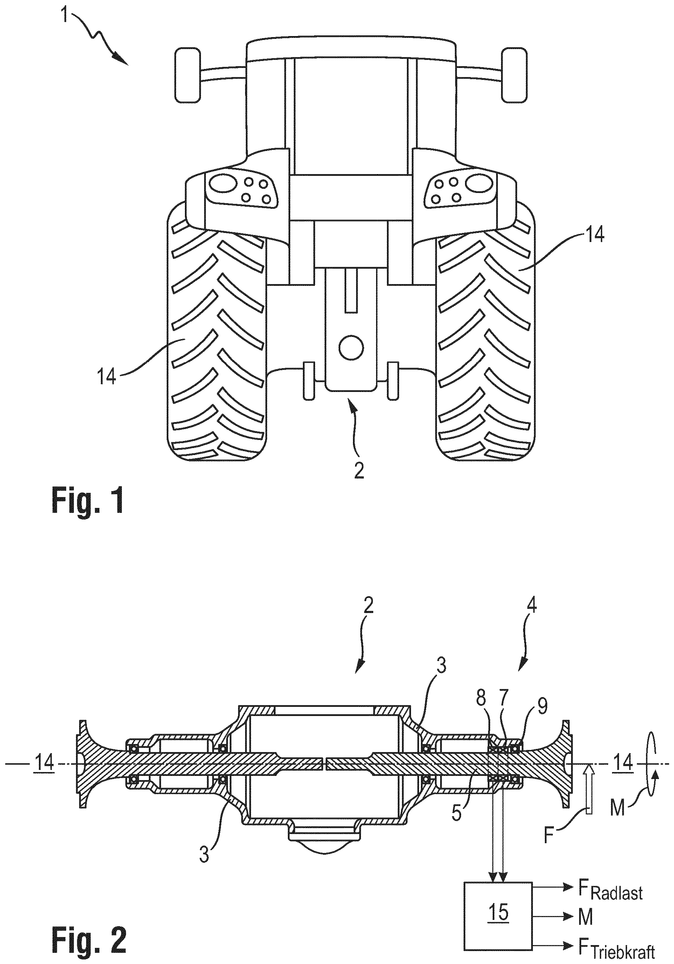

In Fig. 1 ist ein landwirtschaftliches Fahrzeug in Form eines Traktors 1 in schematischer Ansicht von hinten gezeigt. Es handelt sich bei dem Traktor 1 beispielsweise um einen Standardtraktor, der mit einem Antriebsmotor und einem Fahrwerk ausgestattet ist. Davon sind in der Ansicht gemäß Fig. 1 lediglich die beiden Hinterräder 14 dargestellt, die an eine dazwischen liegende Hinterachse 2 angebaut sind. Der Traktor 1 weist auf für sich gesehen bekannte und daher nicht näher zu erläuternde Weise weiterhin Vorderräder auf, die an eine Vorderachse angebaut sind. Der Traktor 1 ist über die Hinterräder 14 antreibbar. Zu diesem Zweck weist der Traktor 1 einen Antriebsstrang auf, mit dem eine Antriebsverbindung vom (nicht gezeigten) Antriebsmotor über die Hinterachse 2 zu den Hinterrädern 14 herstellbar ist.

Die Hinterräder 14 sowie die nicht gezeigten Vorderräder des Traktors 1 sind Teil eines Fahrwerks des Traktors 1 und stellen den Kontakt des Traktors 1 gegenüber dem Boden her. Eine Gesamtmasse des Traktors 1 stützt sich demnach ausschließlich über die Hinterräder 14 und die Vorderräder auf dem Boden ab. Dabei wirken an sämtlichen Rädern des Traktors 1 Kräfte in vertikaler Richtung (Radlast). An den angetriebenen Rädern des Traktors 1 wirken - im Antriebszustand - zusätzlich Triebkräfte sowie Antriebsmomente, bzw. im Bremszustand zusätzlich Bremskräfte sowie Bremsmomente.

Fig. 2 zeigt die Hinterachse 2 des in Fig. 1 gezeigten Traktors 1 in einer vergrößerten Schnittdarstellung von hinten. Dabei sind die in Fig. 1 an die Hinterachse 2 angebauten Hinterräder 14 aus Darstellungsgründen nur durch Bezugszeichen 14 angedeutet worden. Die Hinterachse 2 ist in wesentlichen Merkmalen symmetrisch aufgebaut, bezogen auf eine gedachte vertikale, in Fahrzeuglängsrichtung mittig durch den Traktor 1 verlaufende Spiegelebene. Insbesondere weist die Hinterachse 2 von einem mittig angeordneten Differential nach links und nach rechts (zu den jeweiligen Hinterrädern 14) verlaufende Achswellen 5 auf. Jede der Achswellen 5 ist in einem Achstrichter 3 mittels Wälzlagern drehbar gelagert. An einem äußeren Bereich des jeweiligen Achstrichters 3, d.h. dort, wo die Achswelle 5 aus dem geschlossenen Gehäuse der Hinterachse 2 austritt, befindet sich ein äußeres Radlager 9. Dieses bildet für jede der Achswellen 5 eine äußerste Lagerstelle an der Hinterachse 2. Die innerhalb der jeweiligen Achswelle 5 wirkenden Biegemomente bzw. Normalspannungen, die insbesondere mit einer auf das jeweilige Hinterrad 14 wirkenden Radlast F_{Radlast} und/oder mit einer auf darauf wirkenden Triebkraft F_{Triebkraft} korrespondieren, erreichen im Bereich des äußeren Radlagers 9 konstruktionsbedingt jeweils ihren höchsten Wert.

Aus diesem Grund weist die Hinterachse 2 in diesem Bereich eine Sensoranordnung 4 auf, mit welcher sich eine mechanische Beanspruchung der Achswelle 5 erfassen lässt. Insbesondere lassen sich mit der Sensoranordnung 4 auf die Achswelle 5 wirkende Biegemomente, resultierend aus Fahrwerkskräften, und ein mit der Achswelle 4 übertragenes Drehmoment M erfassen. Zu diesem Zweck ist die Achswelle 5 selbst als ein auf dem Prinzip der inversen Magnetostriktion beruhender Primärsensor ausgebildet, insbesondere als ein magnetoelastischer Sensor.

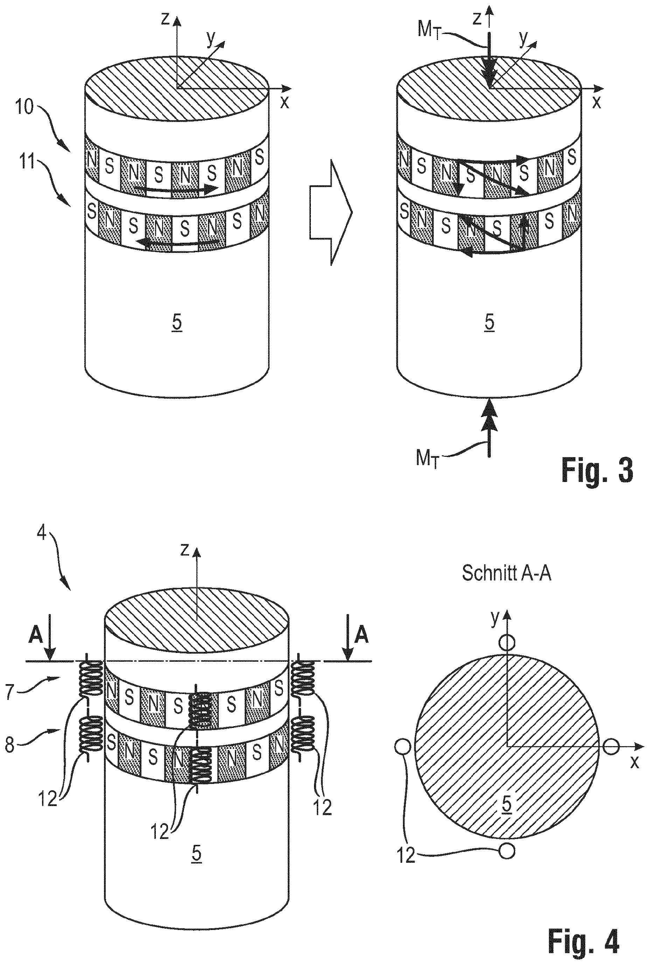

In Fig. 3 ist in vereinfachter Darstellung das dabei zugrunde liegende Wirkungsprinzip für eine Torsionsbeanspruchung dargestellt. Gezeigt ist ein Abschnitt einer Achswelle 5, bei dem es sich mit Bezug auf die Darstellung in Fig. 2 insbesondere um einen Abschnitt der Achswelle 5 in der Nähe des Radlagers 9 handelt.

Wie in Fig. 3 dargestellt, ist in die Achswelle 5 in zwei axialen Abschnitten 10, 11, die sich jeweils umfänglich um die Achswelle 5 erstrecken, ein tangential ausgerichtetes Magnetfeld eingebracht. Jeder der axialen Abschnitte 10, 11 weist dabei eine durch unterschiedliche magnetische Polarität ("N" bzw. "S") gebildete umfängliche Kodierung auf. Diese ist zuvor durch ein spezielles Puls-Kodierungsverfahren erzeugt worden und ist damit dauerhaft auf der Achswelle 5 gespeichert, ohne dass die mechanischen Eigenschaften der Achswelle 5 beeinträchtigt werden.

Wie der Fig. 3 (linke Darstellung) zu entnehmen, ist die Ausrichtung der Magnetisierung der zwei in die Achswelle 5 eingebrachten Magnetfelder 10, 11 jeweils genau entgegengesetzt zueinander. Dies ermöglicht eine Differenzmessung und somit ein späteres Herausrechnen von Störeffekten, die beispielsweise durch das Erdmagnetfeld entstehen.

Wirkt nun auf die mit den axialen magnetisierten Abschnitte 10, 11 versehene Achswelle 5 ein Torsionsmoment M, wie in der rechten Darstellung der Fig. 3 angedeutet, so verändert sich dazu proportional die Ausrichtung der in die Achswelle 5 eingebrachten Magnetfelder. Insbesondere entsteht bei einer Torsion eine axiale Komponente, wie in der rechten Darstellung jeweils durch den kurzen in axialer Richtung verlaufenden Pfeil dargestellt. Eine Sensoranordnung 4, die zur Erfassung einer durch ein solches Torsionsmoment M verursachten Änderung des Magnetfelds geeignet ist, wird in Fig. 4 in Prinzipdarstellung gezeigt.

Fig. 4 zeigt dazu in der linken Darstellung wieder den Abschnitt der Achswelle 5, der mit axialen magnetisierten Abschnitten 10, 11 versehen ist. Zur Erfassung eines aufgrund von Torsion sich ändernden Magnetfelds ist um die Achswelle 5 herum eine Vielzahl von Magnetfeldspulen 12 angeordnet. Wie der rechten Darstellung der Fig. 4 zu entnehmen, welche die Achswelle 5 im axialen Schnitt zeigt, handelt es sich pro axialem magnetisiertem Abschnitt 10, 11 hier um je vier Magnetfeldspulen 12, die äquidistant um die Achswelle 5 herum angeordnet sind. Jede der Magnetfeldspulen 12 ist bezogen auf die Achswelle 5 axial (eingezeichnete z-Richtung) ausgerichtet.

Da die Magnetfeldspulen 12 entlang des Umfangs der Achswelle 5 paarweise angeordnet sind (hier insgesamt also acht Magnetfeldspulen 12 vorgesehen sind), lässt sich eine Differentialmessung durchführen, wobei jede Magnetfeldspule 12 eines Paars jeweils ein Magnetfeld unterschiedlicher Richtung (Polarität) der axialen magnetisierten Abschnitte 10, 11 erfasst.

In den Fig. 3 und 4 sind zur Erfassung einer durch Torsion verursachten Lageverschiebung der in die Achswelle 5 eingebrachten Magnetfelder je vier Magnetfeldspulen 12 pro axialem magnetisiertem Abschnitt 10, 11 vorgesehen. Davon abweichend ist auch eine geringere oder eine höhere Anzahl von axial ausgerichteten Magnetfeldspulen 12 denkbar, wobei mit steigender Anzahl grundsätzlich eine höhere Genauigkeit erzielbar ist.

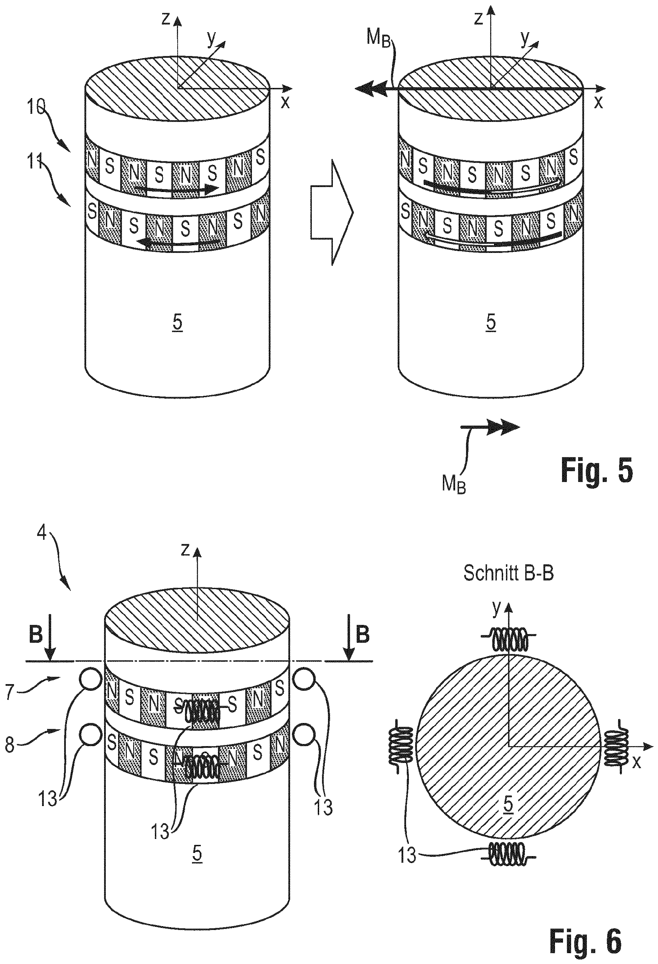

In Fig. 5 ist dagegen in vereinfachter Darstellung das für eine Biegebeanspruchung der Achswelle 5 zugrunde liegende Wirkungsprinzip dargestellt. Gezeigt ist wieder ein Abschnitt einer Achswelle 5, bei dem es sich mit Bezug auf die Darstellung in Fig. 2 insbesondere um einen Abschnitt der Achswelle 5 in der Nähe des Radlagers 9 handelt.

Bei dem in Fig. 5 (linke Darstellung) gezeigten Abschnitt der Achswelle 5 handelt es sich prinzipiell um einen wie bereits zu Fig. 3 erläuterten Achswellenabschnitt, weshalb zur Vermeidung von Wiederholungen auf die dortigen Ausführungen verwiesen wird.

Wirkt nun jedoch auf die mit den axialen magnetisierten Abschnitte 10, 11 versehene Achswelle 5 eine Biegekraft, wie in der rechten Darstellung der Fig. 5 als Biegemoment M_{B} angedeutet, so verändert sich davon abhängig die Länge der tangentialen Magnetfeldvektoren, wie durch den verlängerten Pfeil dargestellt. Eine Sensoranordnung 4, die zur Erfassung einer durch Biegekräfte verursachten Änderung des Magnetfelds geeignet ist, wird in Fig. 6 in Prinzipdarstellung gezeigt.

Fig. 6 zeigt dazu in der linken Darstellung wieder den Abschnitt der Achswelle 5, der mit axialen magnetisierten Abschnitten 10, 11 versehen ist. Zur Erfassung eines aufgrund von Biegung sich ändernden Magnetfelds ist um die Achswelle 5 herum eine Vielzahl von Magnetfeldspulen 13 angeordnet. Wie der rechten Darstellung der Fig. 6 zu entnehmen, welche die Achswelle 5 im axialen Schnitt zeigt, handelt es sich pro axialem magnetisiertem Abschnitt 10, 11 hier um je vier Magnetfeldspulen 13, die äquidistant um die Achswelle 5 herum angeordnet sind. Jede der Magnetfeldspulen 13 ist bezogen auf die Achswelle 5 tangential ausgerichtet.

Da die Magnetfeldspulen 13 entlang des Umfangs der Achswelle 5 paarweise angeordnet sind (hier insgesamt also acht Magnetfeldspulen 13 vorgesehen sind), lässt sich eine Differentialmessung durchführen, wobei jede Magnetfeldspule 13 eines Paars jeweils ein Magnetfeld unterschiedlicher Richtung (Polarität) der axialen magnetisierten Abschnitte 10, 11 erfasst.

Wie der rechten Darstellung der Fig. 6 zu entnehmen, weist die Sensoranordnung 4 vier Magnetfeldspulen 13 auf, die in einer horizontalen Richtung x ausgerichtet sind, und vier Magnetfeldspulen 13, die in einer vertikalen Richtung y ausgerichtet sind. Mit den in horizontaler Richtung x ausgerichteten Magnetfeldspulen 13 lassen sich insbesondere Beanspruchungen der Achswelle 5 erfassen, die mit einer Triebkraft F_{Triebkraft} eines zugehörigen Rads 14 korrespondieren. Mit den in vertikaler Richtung y ausgerichteten Magnetfeldspulen 13 lassen sich insbesondere Beanspruchungen der Achswelle 5 erfassen, die mit einer Radlast F_{Radlast} eines zugehörigen Rads 14 korrespondieren.

In den Fig. 5 und 6 sind zur Erfassung einer durch Biegung verursachten Lageverschiebung der in die Achswelle 5 eingebrachten Magnetfelder je vier Magnetfeldspulen 13 pro axialem magnetisiertem Abschnitt 10, 11 vorgesehen. Davon abweichend ist auch eine geringere oder eine höhere Anzahl von axial ausgerichteten Magnetfeldspulen 13 denkbar, wobei mit steigender Anzahl grundsätzlich eine höhere Genauigkeit erzielbar ist.

Das mit Bezug auf die Fig. 3 bis 6 beschriebene Messprinzip der inversen Magnetostriktion zur Erfassung von auf einen Abschnitt einer Achswelle 5 wirkenden Torsionsmomenten M_{T} und/oder Biegekräften (Biegemomenten M_{B}) kommt an der in Fig. 2 gezeigten Hinterachse 2 zum Einsatz. Dazu ist den beiden Achswellen 5 jeweils eine Sensoranordnung 4 zugeordnet, die nach dem zuvor beschriebenen Prinzip arbeitet. In Fig. 2 sind aus Darstellungsgründen jeweils nur die Magnetfeldsensoren 7 und 8 eingezeichnet, die jeweils einen der an der jeweiligen Achswelle 5 ausgebildeten axialen magnetisierten Abschnitte 10, 11 erfassen.

Zur Erzielung einer hohen Zuverlässigkeit und Genauigkeit der Messung sind die zum Einsatz kommenden Magnetfeldspulen 12, 13 in einer definierten Position zur Achswelle 5 angeordnet. Vorteilhaft sind die Spulen dabei auf Spulenboards in einen Spulenhalter vergossen und werden in fester Position zur Achswelle 5, maximal mit einem Abstand von 3mm, gehalten. Es ist denkbar, die Spulenhalter zusätzlich in ein Gehäuse zu integrieren, um externe magnetische Störfelder abzuschirmen.

Wie in Fig. 2 schematisch gezeigt, stehen die Magnetfeldsensoren 7, 8 mit einer Auswerteinrichtung 15 in Signalverbindung. Die Auswerteinrichtung 15 ist geeignet, mittels der Magnetfeldsensoren 7, 8 erfasste Magnetfeldänderungen, die durch eine Torsion und/oder Biegung der Achswelle 5 verursacht sind, ein an der Achswelle 5 angreifendes Drehmoment M bzw. eine daran angreifende Kraft F_{Radlast}, F_{Triebkraft} zu errechnen.

Vorteilhaft ist denkbar, dass die erfassbaren mechanischen Beanspruchungen der Achswelle 5 als Eingangsgrößen einem System zur Regelung übriger Betriebsparameter und/oder Funktionen des Traktors 1 und/oder eines (nicht gezeigten Anbaugeräts) zugeführt werden. Damit lässt sich vorteilhaft eine Regelung von Betriebsparametern (wie Reifendruck, Ballastierung) und/oder von sonstigen Funktionen des Traktors 1 und/oder Anbaugeräts in Abhängigkeit der Raddrehmomente, der Radlasten und/oder der Radtriebkräfte umsetzen.

Die Erfindung ist anhand des Ausführungsbeispiels für eine Achswelle eines Traktors beschrieben worden. Es sei angemerkt, dass sich vergleichbare Wirkungen auch an Achswellen anderer landwirtschaftlicher Fahrzeuge erzielen lassen. Zudem ist die Erfindung nicht auf eine Anwendung an Achswellen beschränkt, sondern es können auch an anderen Bauteilen von landwirtschaftlichen Fahrzeugen, insbesondere an bewegten Bauteilen wie Getriebewellen auf vergleichbare Weise mechanische Beanspruchungen ermittelt werden.

Durch die Nutzung des Bauteils selbst als magnetoelastischer Sensor ergeben sich verschiedene Vorteile. Aufgrund der berührungslosen Messung von Kräften und Momenten ist das Sensorprinzip bei hoher Genauigkeit wartungsfrei sowie unempfindlich gegenüber Verschmutzung und sonstiger Außeneinwirkung. Eine Messung ist im statischen wie im dynamischen Zustand möglich. Durch die Integration des primären Sensors in das Bauteil selbst sind beispielsweise bei einer Achswellenanordnung innerhalb eines Achsgehäuses keine größeren konstruktiven Änderungen erforderlich.

### Bezugszeichenliste

- 1: Traktor
- 2: Hinterachse
- 3: Achstrichter
- 4: Sensoranordnung
- 5: Achswelle
- 7: Magnetfeldsensor
- 8: Magnetfeldsensor
- 9: Radlager
- 10: magnetisierter Abschnitt
- 11: magnetisierter Abschnitt
- 12: axial ausgerichtete Spule
- 13: tangential ausgerichtete Spule
- 14: Hinterrad
- 15: Auswerteinrichtung

- F_{Radlast}: Kraft (Radlast)
- F_{Triebkraft}: Kraft (Triebkraft)
- M_{T}: Torsionsmoment
- M_{B}: Biegemoment
- x: horizontale Richtung
- y: vertikale Richtung
- z: axiale Richtung

## Patentansprüche

1. Landwirtschaftliches Fahrzeug (1) mit einer Sensoranordnung (4) zum Erfassen einer mechanischen Beanspruchung eines Bauteils (5) des landwirtschaftlichen Fahrzeugs (1), wobei es sich bei dem Bauteil um ein Rotationsteil, insbesondere um eine Welle, bevorzugt um eine Achswelle (5) des Fahrzeugs (1) handelt, wobei das Bauteil (5) eine für dessen mechanische Beanspruchung charakteristische physikalische Eigenschaft aufweist, die mittels eines Aufnehmers (7) erfassbar ist, **dadurch gekennzeichnet, dass** es sich bei dem Aufnehmer um einen oder mehrere Magnetfeldsensoren (7, 8) handelt, die zur Erfassung eines in das Bauteil (5) eingeprägten Magnetfelds geeignet sind, und dass eine mit den Magnetfeldsensoren (7, 8) in Signalverbindung stehende Auswerteinrichtung (15) vorgesehen ist, die geeignet ist, aus einer durch Torsion und Biegung des Bauteils (5) verursachten Änderung dessen Magnetfelds ein an dem Bauteil (5) angreifendes Drehmoment, insbesondere ein Antriebsdrehmoment (M), und eine daran angreifende, insbesondere auf einen Teil des Fahrwerks (2) wirkende Kraft (F_{Radlast}, F_{Triebkraft}) zu ermitteln, wobei das Bauteil (5) zumindest zwei axiale Abschnitte (10, 11) aufweist, an denen ein tangential ausgerichtetes Magnetfeld in das Bauteil (5) eingebracht ist, wobei das Magnetfeld jedes der axialen magnetisierten Abschnitte (10, 11) mittels des zugehörigen Magnetfeldsensors (7, 8) erfassbar ist, wobei jeder der axialen magnetisierten Abschnitte (10, 11) eine durch unterschiedliche magnetische Polarität gebildete umfängliche Kodierung aufweist, wobei das Bauteil (5) selbst Teil eines auf dem Prinzip der inversen Magnetostriktion beruhenden Sensors ist, indem es sich bei der physikalischen Eigenschaft um ein von der mechanischen Beanspruchung des Bauteils (5) abhängiges Magnetfeld des Bauteils (5) handelt, wobei die Ausrichtung der Magnetisierung in den beiden axialen magnetisierten Abschnitten (10, 11) jeweils entgegengesetzt zueinander ist, um eine Differenzmessung zu ermöglichen, wobei die Sensoranordnung (4) zur Erfassung eines auf die Achswelle (5) wirkenden Moments (M) nutzbar ist, wozu im Bereich der axialen magnetisierten Abschnitte (10, 11) axial ausgerichtete Magnetfeldspulen (12) um die Achswelle (5) herum angeordnet sind, wobei die Sensoranordnung (4) zur Erfassung an der Achswelle (5) angreifender Kräfte (F_{Radlast}, F_{Triebkraft}) nutzbar ist, wozu im Bereich der axialen magnetisierten Abschnitte (10, 11) tangential ausgerichtete Magnetfeldspulen (13) um die Achswelle (5) herum angeordnet sind.

2. Landwirtschaftliches Fahrzeug (1) mit einer Sensoranordnung nach Anspruch 1, **dadurch gekennzeichnet, dass** die magnetisierten axialen Abschnitte (10, 11) in einem Bereich der höchsten auf die Achswelle (5) wirkenden Spannungen, insbesondere im Bereich eines außenliegenden Radlagers (9), angeordnet ist.

3. Landwirtschaftliches Fahrzeug (1) mit einer Sensoranordnung nach einem der Ansprüche 1 oder 2, **dadurch gekennzeichnet, dass** in vertikaler Richtung (y) ausgerichtete Magnetfeldspulen (13) zur Erfassung einer Normalspannung in Folge einer Biegung der Achswelle (5) nutzbar sind, die mit der Radlast (F_{Radlast}) des zugehörigen Rads (14) korrespondiert.

4. Landwirtschaftliches Fahrzeug (1) mit einer Sensoranordnung nach einem der Ansprüche 1 bis 3, **dadurch gekennzeichnet, dass** in horizontaler Richtung (x) ausgerichtete Magnetfeldspulen (13) zur Erfassung einer Normalspannung in Folge einer Biegung der Achswelle (5) nutzbar sind, die mit der Triebkraft (F_{Triebkraft}) des zugehörigen Rads (14) korrespondiert.

5. Landwirtschaftliches Fahrzeug (1) mit einer Sensoranordnung nach einem der Ansprüche 1 bis 4, **dadurch gekennzeichnet, dass** die Magnetfeldspulen (12, 13) in einer festen Position gegenüber dem Bauteil (5) angeordnet sind, wobei die Position insbesondere durch Anordnung mehrerer Magnetfeldspulen (12, 13) an einer gemeinsamen Halteeinrichtung vorgegeben ist.

6. Landwirtschaftliches Fahrzeug (1) mit einer Sensoranordnung nach Anspruch 5, **dadurch gekennzeichnet, dass** die Magnetfeldspulen (12, 13) mit einem gemeinsamen Spulenhalter vergossen sind, wobei der Spulenhalter in fester Position zum Bauteil (5) befestigt ist.

7. Landwirtschaftliches Fahrzeug (1) mit einer Sensoranordnung nach einem der Ansprüche 1 bis 6, **dadurch gekennzeichnet, dass** zur Anwendung der inversen Magnetostriktion das Bauteil mit einem Puls-Frequenzmuster kodiert wird und somit eine Kennzeichnung erhält.

8. Landwirtschaftliches Fahrzeug (1) nach einem der vorigen Ansprüche, **gekennzeichnet durch** ein System zur Regelung eines Betriebsparameters und/oder einer Funktion des landwirtschaftlichen Fahrzeugs (1) und/oder eines landwirtschaftlichen Arbeitsgeräts in Abhängigkeit der mechanischen Beanspruchung eines bewegten Bauteils (5) des Fahrzeugs (1), wobei die mechanische Beanspruchung mittels einer Sensoranordnung (4) erfasst wird.

## Claims

1. An agricultural vehicle (1) comprising a sensor arrangement (4) for detecting a mechanical stress on a component (5) of the agricultural vehicle (1), wherein the component is a rotary part, in particular a shaft, preferably an axle shaft (5) of the vehicle (1), wherein the component (5) has a physical property which is characteristic of the mechanical stress thereof and which can be detected by means of a pickup (7), **characterised in that** the pickup is one or more magnetic field sensors (7, 8) which are suitable for detecting a magnetic field impressed in the component (5) and that there is provided an evaluation device (15) which is in signal-conducting relationship with the magnetic field sensors (7, 8) and which is suitable for ascertaining from a change in the magnetic field of the component, that is caused by torsion and bending of the component (5), a torque which engages the component (5), in particular a drive torque (M) and a force (F_{Radlast}, F_{Triebkraft}) which engages same and which acts in particular on a part of the running gear (2), wherein the component (5) has at least two axial portions (10, 11) at which a tangentially oriented magnetic field is introduced into the component (5), wherein the magnetic field of each of the axially magnetised portions (10, 11) can be detected by means of the the associated magnetic field sensor (7, 8), wherein each of the axial magnetised portions (10, 11) has a peripheral coding formed by different magnetic polarity, wherein the component (5) itself is part of a sensor based on the principle of inverse magnetostriction **in that** the physical property is a magnetic field of the component (5), that is dependent on the mechanical stress on the component (5), wherein the orientation of magnetisation in the two axial magnetised portions (10, 11) is respectively in opposite relationship to permit difference measurement, wherein the sensor arrangement (4) can be used for detecting a moment (M) acting on the axle shaft (5), for which purpose axially oriented magnetic field coils (12) are arranged around the axle shaft (5) in the region of the axial magnetised portions (10, 11), wherein the sensor arrangement (4) can be used for detecting forces (F_{Radlast}, F_{Triebkraft}) engaging the axle shaft (5), for which purpose tangentially oriented magnetic field coils (13) are arranged around the axle shaft (5) in the region of the axial magnetized portions (10, 11).

2. An agricultural vehicle (1) comprising a sensor arrangement according to claim 1 **characterised in that** the magnetized axial portions (10, 11) are arranged in a region of the highest stresses acting on the axle shaft (5), in particular in the region of an external wheel bearing (9).

3. An agricultural vehicle (1) comprising a sensor arrangement according to one of claims 1 and 2 **characterised in that** magnetic field coils (13) oriented in the vertical direction can be used for detecting a normal stress as a consequence of bending of the axle shaft (5), which stress corresponds to the wheel load (F_{Radlast}) of the associated wheel (14).

4. An agricultural vehicle (1) comprising a sensor arrangement according to one of claims 1 to 3 **characterised in that** magnetic field coils (13) oriented in the horizontal direction (x) can be used for detecting a normal stress as a consequence of bending of the axle shaft (5), which stress corresponds to the drive force (F_{Triebkraft}) of the associated wheel (14).

5. An agricultural vehicle (1) comprising a sensor arrangement according to one of claims 1 to 4 **characterised in that** the magnetic field coils (12, 13) are arranged in a fixed position with respect to the component (5), wherein the position is predetermined in particular by arranging a plurality of magnetic field coils (12, 13) on a common holding device.

6. An agricultural vehicle (1) comprising a sensor arrangement according to claim 5 **characterised in that** the magnetic field coils (12, 13) are cast with a common coil holder, wherein the coil holder is secured in a fixed position relative to the component (5).

7. An agricultural vehicle (1) comprising a sensor arrangement according to one of claims 1 to 6 **characterised in that** for application of inverse magnetostriction the component is coded with a pulse frequency pattern and thus obtains an identification.

8. An agricultural vehicle (1) according to one of the preceding claims **characterised by** a system for closed-loop control of an operating parameter and/or a function of the agricultural vehicle (1) and/or an agricultural implement in dependence on the mechanical stress on a moving component (5) of the vehicle (1), the mechanical stress being detected by means of a sensor arrangement (4).

## Revendications

1. Véhicule agricole (1) comprenant un agencement de capteur (4) pour détecter une sollicitation mécanique d'un composant (5) du véhicule agricole (1), le composant étant constitué par une pièce rotative, en particulier par un arbre, préférentiellement par un arbre d'essieu (5) du véhicule (1), le composant (5) présentant une propriété physique caractéristique de sa sollicitation mécanique, laquelle est détectable au moyen d'un releveur (7), **caractérisé en ce que** le releveur est constitué par un ou plusieurs capteurs de champ magnétique (7, 8) qui sont aptes à détecter un champ magnétique imposé au composant (5), et **en ce qu'**est prévu un équipement d'analyse (15) qui est en liaison signalétique avec les capteurs de champ magnétique (7, 8) et qui est apte à déterminer, à partir d'une modification du champ magnétique du composant (5) due à une torsion et à une flexion de celui-ci, un couple agissant sur le composant (5), en particulier un couple d'entraînement (M), et une force (F_{Radlast}, F_{Triebkraft}) agissant sur celui-ci, en particulier s'exerçant sur une partie du train de roulement (2), le composant (5) comportant au moins deux portions axiales (10, 11) au niveau desquelles un champ magnétique orienté tangentiellement est introduit dans le composant (5), le champ magnétique de chacune des portions axiales magnétisées (10, 11) étant détectable au moyen du capteur de champ magnétique associé (7, 8), chacune des portions axiales magnétisées (10, 11) comportant un codage périphérique formé par une polarité magnétique différente, le composant (5) faisant lui-même partie d'un capteur reposant sur le principe de la magnétostriction inverse par le fait que la propriété physique est constituée par un champ magnétique du composant (5) dépendant de la sollicitation mécanique du composant (5), l'orientation de la magnétisation dans les deux portions axiales magnétisées (10, 11) étant respectivement mutuellement opposée afin de permettre une mesure de différence, l'agencement de capteur (4) étant utilisable pour détecter un moment (M) agissant sur l'arbre d'essieu (5), des bobines de champ magnétique (12) orientées axialement étant disposées à cet effet autour de l'arbre d'essieu (5) dans la zone des portions axiales magnétisées (10, 11), l'agencement de capteur (4) étant utilisable pour détecter des forces (F_{Radlast}, F_{Triebkraft}) agissant sur l'arbre d'essieu (5), des bobines de champ magnétique (13) orientées tangentiellement étant disposées à cet effet autour de l'arbre d'essieu (5) dans la zone des portions axiales magnétisées (10, 11).

2. Véhicule agricole (1) comprenant un agencement de capteur selon la revendication 1, **caractérisé en ce que** les portions axiales magnétisées (10, 11) sont disposées dans une zone des tensions maximales agissant sur l'arbre d'essieu (5), en particulier dans la zone d'un roulement de roue extérieur (9).

3. Véhicule agricole (1) comprenant un agencement de capteur selon une des revendications 1 ou 2, **caractérisé en ce que** des bobines de champ magnétique (13) orientées dans la direction verticale (y) sont utilisables pour détecter une tension normale consécutive à une flexion de l'arbre d'essieu (5) qui correspondant à la charge de roue (F_{Radlast}) de la roue associée (14).

4. Véhicule agricole (1) comprenant un agencement de capteur selon une des revendications 1 à 3, **caractérisé en ce que** des bobines de champ magnétique (13) orientées dans la direction horizontale (x) sont utilisables pour détecter une tension normale consécutive à une flexion de l'arbre d'essieu (5) qui correspond à la force motrice (F_{Triebkraft}) de la roue associée (14).

5. Véhicule agricole (1) comprenant un agencement de capteur selon une des revendications 1 à 4, **caractérisé en ce que** les bobines de champ magnétique (12, 13) sont disposées dans une position fixe par rapport au composant (5), la position étant prédéfinie en particulier par le montage de plusieurs bobines de champ magnétique (12, 13) sur un équipement de support commun.

6. Véhicule agricole (1) comprenant un agencement de capteur selon la revendication 5, **caractérisé en ce que** les bobines de champ magnétique (12, 13) sont coulées avec un porte-bobines commun, le porte-bobines étant assujetti en position fixe par rapport au composant (5).

7. Véhicule agricole (1) comprenant un agencement de capteur selon une des revendications 1 à 6, **caractérisé en ce que**, pour appliquer la magnétostriction inverse, le composant est codé avec un motif de fréquence d'impulsions et reçoit donc un marquage.

8. Véhicule agricole (1) selon une des revendications précédentes, **caractérisé par** un système de régulation d'un paramètre de fonctionnement et/ou d'une fonction du véhicule agricole (1) et/ou d'un outil de travail en fonction de la sollicitation mécanique d'un composant déplacé (5) du véhicule (1), la sollicitation mécanique étant détectée au moyen d'un agencement de capteur (4).
